# EUROPEAN PATENT APPLICATION

(11) **EP 3 771 219 A1**
(43) Date of publication of application: **27.01.2021**
(21) Application number: 20174849.8
(22) Date of filing: 15.05.2020
(51) Int. Cl.: H04N 21/436

(54) **DISPLAY APPARATUS AND CONTROL METHOD THEREOF**

(30) Priority: 22.07.2019 KR 20190088028
(71) Applicant: Samsung Electronics Co., Ltd., Gyeonggi-do 16677 (KR)
(72) Inventor: LEE, Sangmin, 16677 Gyeonggi-do (KR); KOO, Wookwon, 16677 Gyeonggi-do (KR)
(74) Representative: Appleyard Lees IP LLP

(57) **Abstract**

Disclosed is a display apparatus including a display, a communicator, and a processor which identifies an external apparatus to be remotely controlled and a remote-control characteristic about the external apparatus, selects one among a plurality of remote-control protocols based on the identified remote-control characteristic, controls the communicator to receive a signal of content from the external apparatus based on the selected remote-control protocol, and controls the display to display an image of the content based on the received signal.

## Description

### CROSS-REFERENCE TO RELATED APPLICATION

This application is based on and claims priority under 35 U.S.C. §119 to Korean Patent Application No. 10-2019-0088028 filed on July 22, 2019 in the Korean Intellectual Property Office, the disclosure of which is incorporated by reference herein in its entirety.

### BACKGROUND

### Field

The disclosure relates to a display apparatus and a control method thereof, and more particularly to a display apparatus which remotely controls an external apparatus through a remote-control protocol, and a control method thereof.

### Description of the Related Art

With recent rapid development of display technology, it has been possible for a display apparatus to remotely control its peripheral external apparatuses. A remote-control function refers to a technique for allowing a user to control functions of remote an external apparatus as if the user controls the functions of the display apparatus, while viewing a remote-control screen of the external apparatus through the display apparatus. For example, when a user wants to view an image based on content stored in a computer in a study room by remotely controlling the computer through a television (TV) in a living room, the user accesses the computer in the study room through the TV in the living room, and selects the content stored in the computer as if the user selects the content stored in the TV, while viewing a screen, i.e., a remote-control screen of the computer displayed on the TV. When the user selects the content stored in the computer, the computer displays the image of the content on the screen of the computer, and the TV displays the image of the content through the remote-control screen. Like this, the TV has access to the resources of the remote computer by the remote-control function. Therefore, the remote-control function improves TV usability and user convenience.

Here, a user selects a remote-control protocol to be used in the remote control for allowing the TV in the living room to remotely control the computer in the study room. The remote-control protocol refers to a set of rules for remote-control data communication between the TV and the computer. A user selects the remote-control protocol by considering an operating system of the computer, a network condition, a content type, and the like remote-control environments one by one.

However, such a method of burdening a user to select the remote-control protocol under increasingly complex remote-control environments not only lowers user accessibility to the remote-control function but also causes inefficiency in the remote-control data communication because of a remote-control protocol unsuited for the remote-control environments, thereby hindering the utilizability of the remote-control function and the user convenience.

Accordingly, there is a need of further improving the utilizability of the remote-control function and the user convenience by adaptively selecting the remote-control protocol in consideration of the remote-control environments when the display apparatus is used for remotely controlling a remote external apparatus.

### SUMMARY

According to an exemplary embodiment, there is provided a display apparatus including a display, a communicator, and a processor configured to identify an external apparatus to be remotely controlled and a remote-control characteristic about the external apparatus, select one among a plurality of remote-control protocols based on the identified remote-control characteristic, control the communicator to receive a signal of content from the external apparatus based on the selected remote-control protocol, and control the display to display an image of the content based on the received signal.

The remote-control characteristic may include a characteristic of an operating system of the external apparatus.

The processor may identify the characteristic of the operating system based on information about a network port of the external apparatus.

The remote-control characteristic may include at least one of a bandwidth for communication with the external apparatus or a distance from the external apparatus.

The remote-control characteristic may include a characteristic of an application program executed in the external apparatus.

The characteristic of the application program may include quality of an image displayed on the external apparatus by the application program.

The characteristic of application program may include a user control level with regard to the application program.

The remote-control characteristic may include a characteristic of user preference about the remote-control protocols.

The processor may be configured to receive information about the remote-control protocol from the identified external apparatus, and select one among the plurality of remote-control protocols based on the received information.

The processor may be configured to identify whether an application for remote control is installed in the external apparatus, and perform operation for installing the application based on the application being not installed.

The remote-control protocol may include one of remote desktop protocol (RDP), virtual network computing (VNC), or mirroring.

According to another exemplary embodiment, there is provided a method of controlling a display apparatus, the method including: identifying an external apparatus to be remotely controlled and a remote-control characteristic about the external apparatus, selecting one among a plurality of remote-control protocols based on the identified remote-control characteristic, receiving a signal of content from the external apparatus based on the selected remote-control protocol, and displaying an image of the content based on the received signal.

The remote-control characteristic may include a characteristic of an operating system of the external apparatus.

The identifying of the remote-control characteristic may include identifying the characteristic of the operating system based on information about a network port of the external apparatus.

The remote-control characteristic may include at least one of a bandwidth for communication with the external apparatus or a distance from the external apparatus.

The remote-control characteristic may include a characteristic of an application program executed in the external apparatus.

The characteristic of the application program may include quality of an image displayed on the external apparatus by the application program.

According to another exemplary embodiment, there is provided an electronic apparatus including a communicator, and a processor configured to identify a remote-control characteristic of the electronic apparatus based on a request for remote control received from a display apparatus through the communicator, select one among a plurality of remote-control protocols based on based on the identified remote-control characteristic, and controlling the communicator to transmit information about the selected remote-control protocol to the display apparatus, and transmit a signal of content to the display apparatus based on the selected remote-control protocol.

According to another exemplary embodiment, there is provided a method of controlling an electronic apparatus, the method including: identifying a remote-control characteristic of the electronic apparatus based on a request for remote control received from a display apparatus, selecting one among a plurality of remote-control protocols based on based on the identified remote-control characteristic, and transmitting information about the selected remote-control protocol to the display apparatus, and transmitting a signal of content to the display apparatus based on the selected remote-control protocol.

According to another exemplary embodiment, there is provided a recording medium stored with a computer program comprising a code for carrying out a method of controlling a display apparatus, as a computer readable code, the method including: identifying an external apparatus to be remotely controlled and a remote-control characteristic about the external apparatus, selecting one among a plurality of remote-control protocols based on the identified remote-control characteristic, receiving a signal of content from the external apparatus based on the selected remote-control protocol, and displaying an image of the content based on the received signal.

### BRIEF DESCRIPTION OF THE DRAWINGS

The above and/or the aspects will become apparent and more readily appreciated from the following description of exemplary embodiments, taken in conjunction with the accompanying drawings, in which:
FIG. 1 illustrates a display apparatus according to an embodiment of the disclosure;
FIG. 2 is a block diagram showing an exemplary configuration of the display apparatus in FIG. 1;
FIG. 3 is a block diagram showing another exemplary configuration of the display apparatus in FIG. 1;
FIG. 4 is a flowchart showing an exemplary control method of the display apparatus in FIG. 1;
FIG. 5 illustrates an example that the display apparatus searches for an external apparatus, in connection with operation S41 of FIG. 4;
FIG. 6 illustrates another example that the display apparatus searches for an external apparatus, in connection with operation S41 of FIG. 4;
FIG. 7 illustrates an example that the display apparatus guides installation of an application for remote control, in connection with operation S41 of FIG. 4;
FIG. 8 illustrates an example of selecting a remote-control protocol based on a remote-control characteristic, i.e. an operating system of an external apparatus;
FIG. 9 illustrates an example of selecting a remote-control protocol based on a remote-control characteristic, i.e. an application program executed in an external apparatus;
FIG. 10 illustrates an example of selecting a remote-control protocol based on a remote-control characteristic, i.e. a network condition;
FIG. 11 illustrates an example of selecting a remote-control protocol based on a remote-control characteristic, i.e. user preference or use history;
FIG. 12 illustrates an example of selecting a remote-control protocol based on information received from an external apparatus, in connection with operation S42 of FIG. 4;
FIG. 13 is a block diagram showing an exemplary configuration of an electronic apparatus according to another embodiment; and
FIG. 14 is a flowchart showing an exemplary control method of the electronic apparatus in FIG. 13.

### DETAILED DESCRIPTION

Below, embodiments of the disclosure will be described in detail with reference to accompanying drawings. In the description of the following embodiments, elements illustrated in the accompanying drawings will be referenced, and like numerals or symbols set forth in the drawings refer to like elements having substantially the same operations. In the disclosure, at least one among a plurality of elements refers to not only all the plurality of elements but also both each one of the plurality of elements excluding the other elements and a combination thereof.

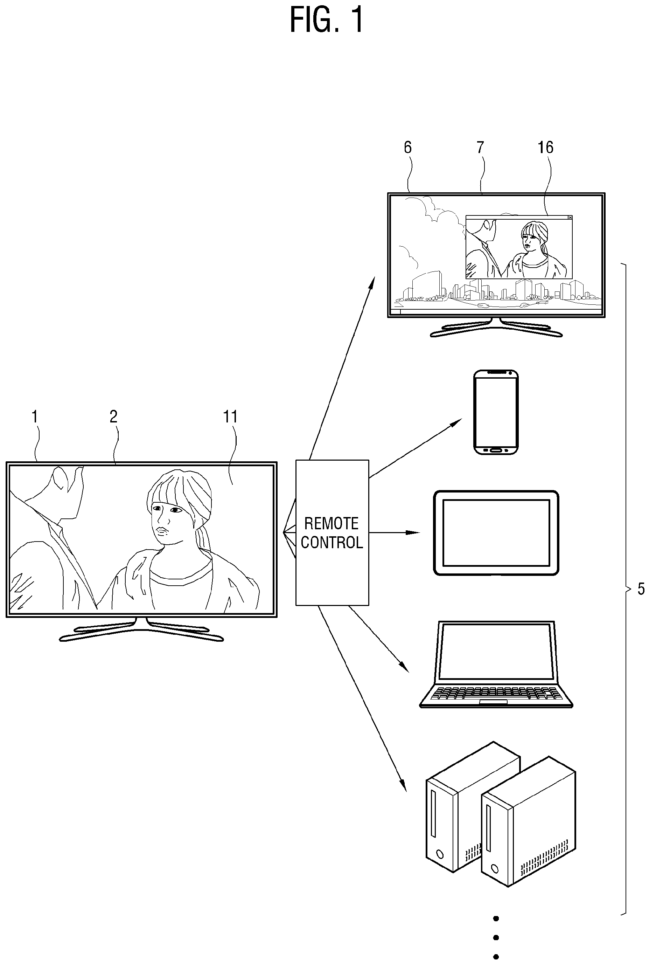

FIG. 1 illustrates a display apparatus 1 according to an embodiment of the disclosure. As shown in FIG. 1, the display apparatus 1 may display an image 11 on a display 2. The image 11 may include images of various pieces of content such as a movie, music, a soap opera, a picture, a cartoon, an animation, a computer game, etc. FIG. 1 shows that the display apparatus 1 is a television (TV), but the display apparatus 1 is not limited to the TV. Alternatively, the display apparatus 1 may be embodied by a smartphone, a tablet computer, a personal computer, a wearable device such as a smart watch, a multimedia player, an electronic frame, and a digital signage. However, for convenience of description, descriptions will be made on the assumption that the display apparatus 1 is the TV.

The display apparatus 1 may remotely control at least one among a plurality of external apparatuses 5. The display apparatus 1 may remotely control the plurality of external apparatuses 5 individually, or may remotely control at least two among the plurality of external apparatuses 5 at a time. The external apparatuses 5 may be embodied by a TV 6, or may be embodied by a smartphone, a tablet computer, a personal computer, an electronic frame, or a server. However, for convenience of description, descriptions will be made on the assumption that one of the external apparatuses 5 is embodied by the TV 6.

The display apparatus 1 may display the image 11 based on the content of the external apparatus 6 by remotely controlling the external apparatus 6. The display apparatus 1 may display a remote-control screen, which is obtained by capturing a screen of the external apparatus 6, on the display 2. For example, when an image 16 based on content selected in the external apparatus 6 through the remote control is displayed on a display 7 of the external apparatus 6, the screen showing the image 16 based on the content may be captured and provided to the display apparatus 1. The display apparatus 1 displays the captured screen as the remote-control screen, and thus displays the image 11 based on the corresponding content.

The display apparatus 1 may select one remote-control protocol among a plurality of remote-control protocols, and performs the remote control based on the selected remote-control protocol. The remote-control protocol refers to a set of rules for remote-control data communication with the external apparatus 6, and may for example include a remote desktop protocol (RDP), virtual network computing (VNC), mirroring, etc. without limitations. According to the RDP, a part changed in the screen of the external apparatus 6 by a remote-control command is captured and provided to the display apparatus 1. On the other hand, according to the VNC, the full screen of the external apparatus 6 is captured and provided to the display apparatus 1 regardless of change caused by the remote-control command. Further, according to the mirroring, data based on the remote control may be provided to the display apparatus 1 by a streaming mode.

Such various remote-control protocols have their own unique characteristics and are thus different in performance of the remote control. Therefore, use of a remote-control function and a user's use experience are varied depending on which one of the remote-control protocols is used in the remote control. Accordingly, the display apparatus 1 in this embodiment uses the optimum protocol according to conditions, thereby maximizing the usability of the remote-control function and user convenience.

Specifically, the display apparatus 1 according to an embodiment may select the remote-control protocol according to the remote-control characteristic of the external apparatus 6. The remote-control characteristic of the external apparatus 6 refers to various matters showing the current conditions to be considered when the optimum remote-control protocol suitable for the condition is selected, and may for example include an operating system of the external apparatus 6, a program to be remotely controlled, content to be used, a remote network condition, a user's preference or use history, etc. In this regard, details will be described later.

For example, when the plurality of remote-control protocols supported in the display apparatus 1 include the RDP, the VNC, and the mirroring, the display apparatus 1 may select one remote-control protocol suitable for the current conditions among the RDP, the VNC, and the mirroring by taking the remote-control characteristic of the external apparatus 6 into account, and perform the remote-control data communication with the external apparatus 6 based on the selected remote-control protocol.

Thus, the display apparatus 1 according to an embodiment adaptively identifies the remote-control protocol based on the remote-control characteristic of the external apparatus 6 in terms of performing the remote control of the external apparatus 6, and performs the remote-control data communication based on the identified remote-control protocol. Therefore, the remote-control data communication is efficiently performed even under increasingly complex remote-control environments, thereby further improving the utilizability of the remote-control function and the user convenience.

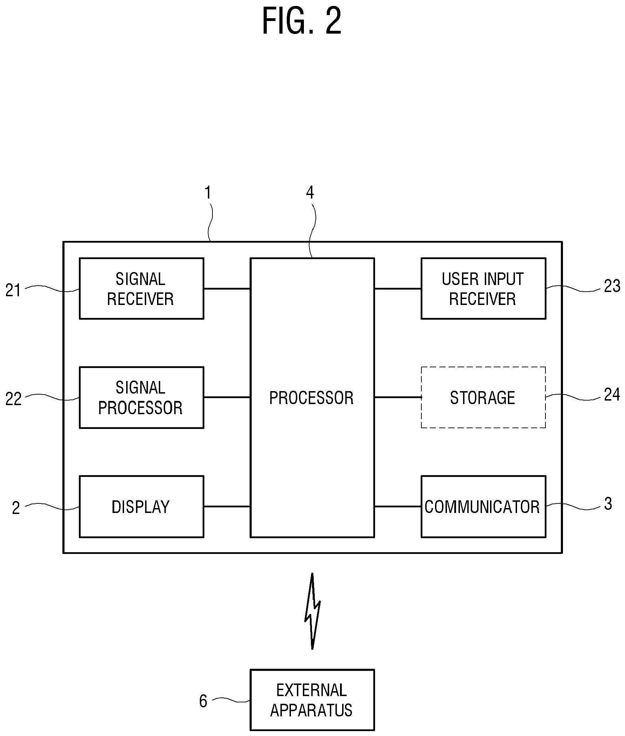

FIG. 2 is a block diagram showing an exemplary configuration of the display apparatus in FIG. 1. As shown in FIG. 2, the display apparatus 1 according to an embodiment may include a signal receiver 21, a signal processor 22, a display 2, a user input receiver 23, a communicator 3, and a processor 4.

The signal receiver 21 may receive a signal of content from a content providing apparatus. The content providing apparatus may include a terrestrial sever, an Internet protocol TV (IPTV) server, a cable server, a set-top Box, a Blu-ray disc, etc. However, there are no limits to the content providing apparatus. Therefore, the signal receiver 21 may receive a signal of content from various content providing apparatuses.

The signal processor 22 may perform predetermined signal processing with regard to the signal of the content received in the signal receiver 21. In a case of a video signal, the signal processor 22 performs video processing with regard to the video signal, so that the display 2 can display an image of content. The video processing may for example include tuning to the video signal, decoding corresponding to the kind of video signal, scaling, noise reduction, detail enhancement, frame refresh rate conversion, etc. Further, the signal processor 22 may perform audio processing with regard to an audio signal, so that a sound output unit such as a loudspeaker, etc. can output a sound.

The signal processor 22 may include a hardware processor which is embodied by a chipset mounted to a printed circuit board, a circuit, a buffer, etc., and may be designed as a system on chip (SoC).

The display 2 may display an image of content based on a signal of the content processed by the signal processor 22. For example, there are various types of display 2, such as liquid crystal, plasma, an organic light-emitting diode, a carbon nano-tube, nano-crystal, etc., and the display 2 is not limited to these types.

The user input receiver 23 may receive a user input. The user input receiver 23 may include an input receiving circuit, and the input receiving circuit may be variously embodied according to a user's input methods. For example, when a user input is received through a remote controller, the input receiving circuit may include a remote-control signal module for receiving a remote-control signal. However, the input receiving circuit may include a configuration for receiving a signal of a user input from a smartphone, a wearable device, etc. as well as the remote controller. Alternatively, the input receiving circuit may include a menu button provided at one side of the display apparatus 1, or may include a touch panel coupled to the display 2.

The communicator 3 may perform data communication with the external apparatus 6. The communicator 3 may for example perform wired or wireless communication based on various communication methods such as Wi-Fi, Bluetooth, ZigBee, Wi-Fi Direct (WFD), ultra-wideband (UWB), infrared data association (IrDA), Bluetooth low energy (BLE), near field communication (NFC), etc. and include at least one communication module for the wired or wireless communication. For the remote control, the communicator 3 may perform data communication with each individual among the plurality of external apparatuses 5 or may simultaneously perform data communication with at least two among the plurality of external apparatuses 5.

The processor 4 may control general elements of the display apparatus 1. For example, the processor 4 may identify the external apparatus 6 to be remotely controlled and the remote-control characteristic of the external apparatus 6, select one among the plurality of remote-control protocols based on the identified remote-control characteristic, control the communicator 3 to receive a signal of content from the external apparatus 6 based on the selected remote-control protocol, and control the display 2 to display an image of content based on the signal received through the communicator 3.

The processor 4 may include a control program (or instruction) for performing control with regard to general elements, a nonvolatile memory in which the control program is installed, a volatile memory in which at least a part of the installed control program is loaded, and at least one processor or central processing unit (CPU) for executing a loaded control program. Further, such a control program may have been stored in an electronic apparatus other than the display apparatus 1.

The control program may include a program(s) actualized in the form of at least one among a basis input/output system (BIOS), a device driver, an operating system, a firmware, a platform, and an application. According to an exemplary embodiment, the application may be previously installed or stored when the display apparatus 1 is manufactured, or may be installed based on application data received from the outside when it is used in the future. The application data may for example be downloaded from an application market and the like external server. Such a server is an example of a computer program product, but not limited to this example.

Further, the processor 4 may identify the external apparatus 6 to be remotely controlled and the remote-control characteristic about the external apparatus 6, selects one among the plurality of remote-control protocols based on the identified remote-control characteristic, control the communicator 3 to receive the signal of the content from the external apparatus 6 based on the selected remote-control protocol, and perform at least a portion of data analysis, processing, and result-information generation for controlling the display 2 to display the image of the content based on the signal received through the communicator 3 by using at least one among machine learning, a neural network or deep-learning algorithm as a rule-based or artificial intelligence algorithm

For example, the processor 4 may function as both a learner and a recognizer. The learner may for example serve to generate a learned neural network, and the recognizer may for example serve to recognize (or infer, predict, estimate, and identify) data by using the learned neural network. The learner may create or update a neural network. The learner may obtain learning data to create a neural network. For example, the learner may obtain the learning data from a storage 24 to be described later or the outside. The learning data may refer to data used for learning the neural network. For example, the remote-control characteristic about the external apparatus 6 and the remote-control protocol based on the remote-control characteristic may be used as the learning data to learn the neural network.

The learner may perform preprocessing with regard to the obtained learning data or select data to be used in learning among a plurality of pieces of the learning data, before using the learning data to learn the neural network. For example, the learner may process the learning data to have a preset format, apply filtering to the learning data, or add/remove noise to/from the learning data, thereby processing the learning data into a form of data suitable for learning. The learner may use the preprocessed learning data to identify the remote-control characteristic about the external apparatus 6, and create a neural network set to select a remote-control protocol based on the identified remote-control characteristic.

The learned neural network may include a plurality of neural networks (or layers). The plurality of neural networks may include weighted nodes, and the plurality of neural networks may be connected one another so that a value output from one neural network can be used as a value input to another neural network. The neural network may for example include a convolutional neural network (CNN), a deep neural network (DNN), a recurrent neural network (RNN), a restricted Boltzmann machine (RBM), a deep belief network (DBN), a bidirectional recurrent deep neural network (BRDNN), deep q-networks, and the like model.

Meanwhile, the recognizer may identify the remote-control characteristic about the external apparatus 6, and obtain target data to select a remote-control protocol. The target data may be obtained from the storage 24 or the outside. The target data may refer to data to be recognized by the neural network. The recognizer may perform preprocessing with regard to the obtained target data or select data to be used in recognition among a plurality of pieces of target data, before applying the target data to the learned neural network. For example, the recognizer may process the target data to have a preset format, apply filtering to the target data, or add/remove noise to/from the target data, thereby processing the target data into a form of data suitable for the recognition. The recognizer applies the preprocessed target data to the neural network, thereby obtaining an output value output from the neural network. According to alternative embodiments, the recognizer may obtain a probability value or reliability value together with the output value.

At least one element may be excluded from the foregoing configuration of the display apparatus 1 or another element may be added to the foregoing configuration of the display apparatus. For example, the display apparatus 1 may further include a storage 24, a power supply, etc.

The storage 24 may be configured to store data for processing the elements of the display apparatus 1 and programs for controlling the elements. The storage 24 may include a storage medium of at least one type among a flash memory type, a hard disk type, a multimedia card micro type, a card type memory, and a read only memory (ROM). Further, without limitations, the storage 24 may also be achieved by a web storage configured to store data and programs on the Internet.

Meanwhile, the power supply may receive power from an external power source or an internal power source under control of the processor 4 and supply required power to the elements of the display apparatus 1.

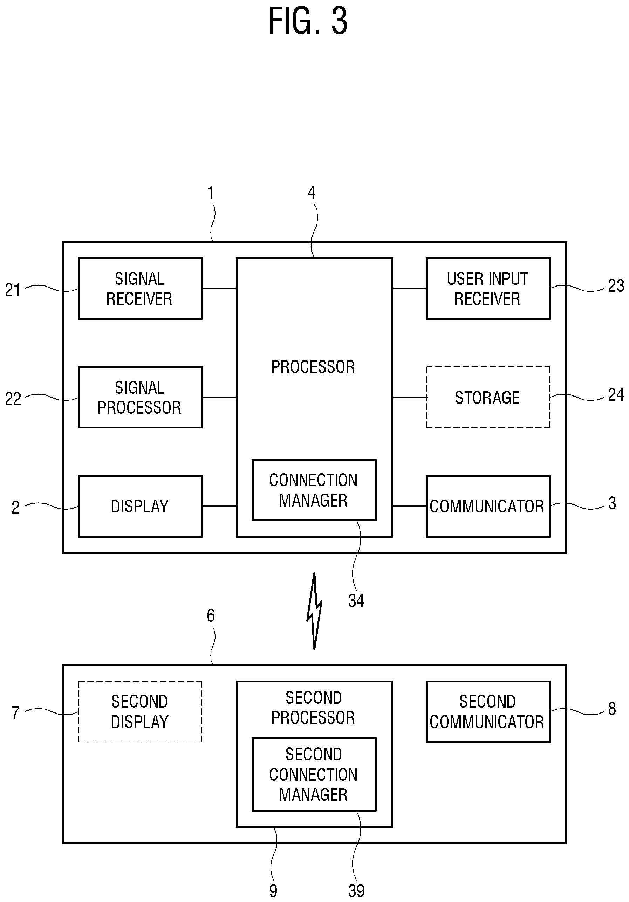

FIG. 3 is a block diagram showing another exemplary configuration of the display apparatus in FIG. 1. As shown in FIG. 3, the display apparatus 1 according to an embodiment may include the signal receiver 21, the signal processor 22, the display 2, the user input receiver 23, the communicator 3, and the processor 4, and the processor 4 may further include a connection manager 34.

Further, the external apparatus 6 may include the second display 7, a second communicator 8, and a second processor 9, and the second processor 4 may further include a second connection manager 39. Below, details will be described avoiding repetitive descriptions and focusing on only difference between FIGS. 2 and 3.

First, regarding the configuration of the external apparatus 6, the second display 7 may display an image of content based on a signal of the content, and may for example be embodied by various types, such as liquid crystal, plasma, an organic light-emitting diode, a carbon nano-tube, nano-crystal, etc. The second communicator 8 may perform wired/wireless data communication with the external display apparatus 1. Further, the second processor 9 may control general elements of the electronic apparatus 6. The second processor 9 may include a control program (or instruction) for performing control with regard to general elements, a nonvolatile memory in which the control program is installed, a volatile memory in which at least a part of the installed control program is loaded, and at least one processor or CPU for executing a loaded control program. Further, the second processor 9 may further include the second connection manager 39.

According to an embodiment, the connection manager 34 of the processor 4 refers to an application for the remote control, which may select a remote-control protocol suitable for the current conditions among the plurality of remote-control protocols. In more detail, the connection manager 34 may transmit a request for the remote control to the external apparatus 6, and receive information about the remote-control protocol based on the remote-control characteristic of the external apparatus 6 from the second connection manager 39 of the external apparatus 6. In response to the request for the remote control from the connection manager 34, the second connection manager 39 may identify the remote-control protocol based on the remote-control characteristic of the external apparatus 6, and transmit information about the identified remote-control protocol to the connection manager 34.

The connection manager 34 may select one remote-control protocol among the plurality of remote-control protocols based on the information received from the second connection manager 39, and perform the remote control for the external apparatus 6 based on the selected remote-control protocol.

Thus, the connection manager 34 of the processor 4 according to this embodiment may select the remote-control protocol based on the information received from the second connection manager 39 of the external apparatus 6, and perform the remote-control data communication with the external apparatus 6 based on the selected remote-control protocol. Therefore, the optimum protocol according to the current conditions is used to thereby improve the utilizability of the remote-control function and the user convenience.

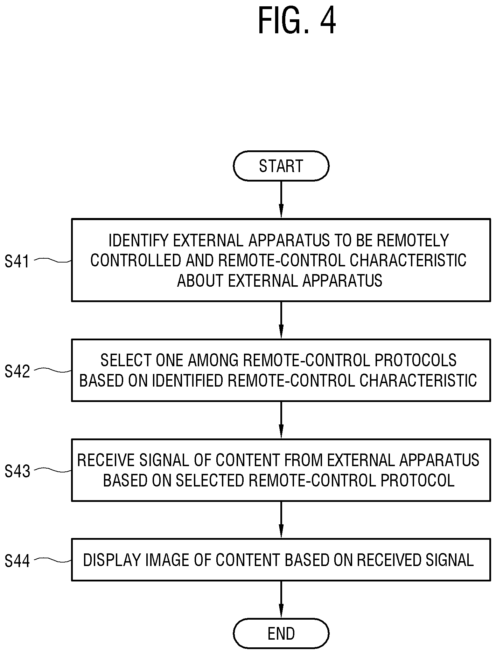

FIG. 4 is a flowchart showing an exemplary control method of the display apparatus in FIG. 1. In this embodiment, the control method may be carried out as the processor 4 of the display apparatus 1 executes the control program described above. Hereafter, for convenience of description, the operations of the processor 4 carried out by executing the control program may be simply described as the operations of the processor 4.

Referring to FIG. 4, the processor 4 identifies the external apparatus 6 to be remotely controlled and the remote-control characteristic about the external apparatus 6 (S41), and selects one among the plurality of remote-control protocols based on the identified remote-control characteristic (S42).

Further, the processor 4 receives a signal of content from the external apparatus 6 based on the selected remote-control protocol (S43), and displays an image of the content based on the received signal (S44).

Thus, by the control method according to this embodiment, the display apparatus 1 adaptively identifies the remote-control protocol based on the remote-control characteristic of the external apparatus 6 in terms of performing the remote control of the external apparatus 6, and performs the remote-control data communication based on the identified remote-control protocol. Therefore, the remote-control data communication is efficiently performed even under increasingly complex remote-control environments, thereby further improving the utilizability of the remote-control function and the user convenience.

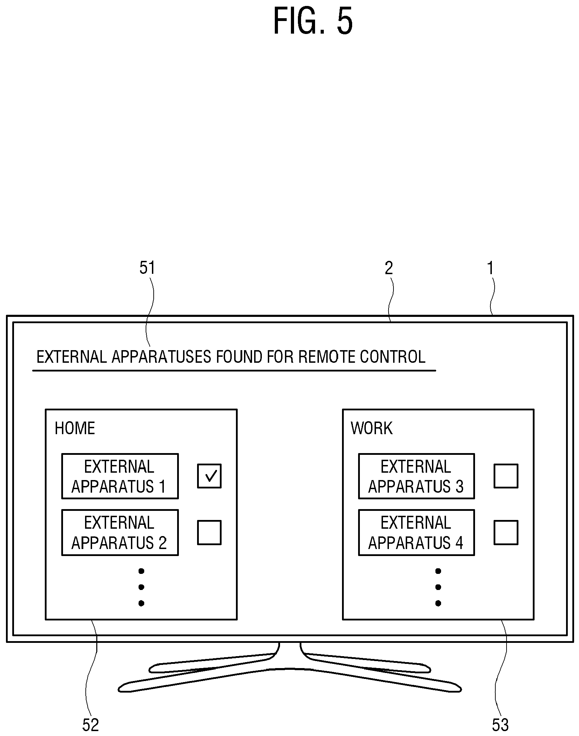

FIG. 5 illustrates an example that the display apparatus searches for an external apparatus, in connection with operation S41 of FIG. 4. As shown in FIG. 5, the processor 4 according to this embodiment may search for an external apparatus 6 to be remotely controlled. The search for the external apparatus 6 to be remotely controlled may be carried out in response to a user input. For example, when a user makes a user input for the remote control, the processor 4 may scan the external apparatus 6 connected to the network.

The processor 4 may control the display 2 to display a scanning result, i.e. an external-apparatus list user interface (Ul) 51 showing the external apparatuses found as connected to the network. The external-apparatus list UI 51 may include an in-home external-apparatus list UI 52 in which the external apparatuses connected to a local network are listed, or an out-of-home external-apparatus list UI 53 in which external apparatuses disconnected from the local network are listed. For example, referring to FIG. 5, the in-home external-apparatus list UI 52 may show an "external apparatus 1", an "external apparatus 2", etc. found as connected to an in-home network at home or the like, and the out-of-home external-apparatus list UI 53 may show an "external apparatus 3", an "external apparatus 4", etc. found as connected to an out-of-home network at work or the like.

Meanwhile, the processor 4 may sort the external apparatuses according to priorities when displaying the external-apparatus list UI 51. For example, the processor 4 may consider a user's preference, remote-controlling times, remote-controlling time, etc. to prioritize the external apparatuses. For example, as shown in FIG. 5, the "external apparatus 1" displayed first in the in-home external-apparatus list UI 52 may be the external apparatus which has higher priority than the "external apparatus 2" with respect to a user's preference, remote-controlling times, remote-controlling time, etc.

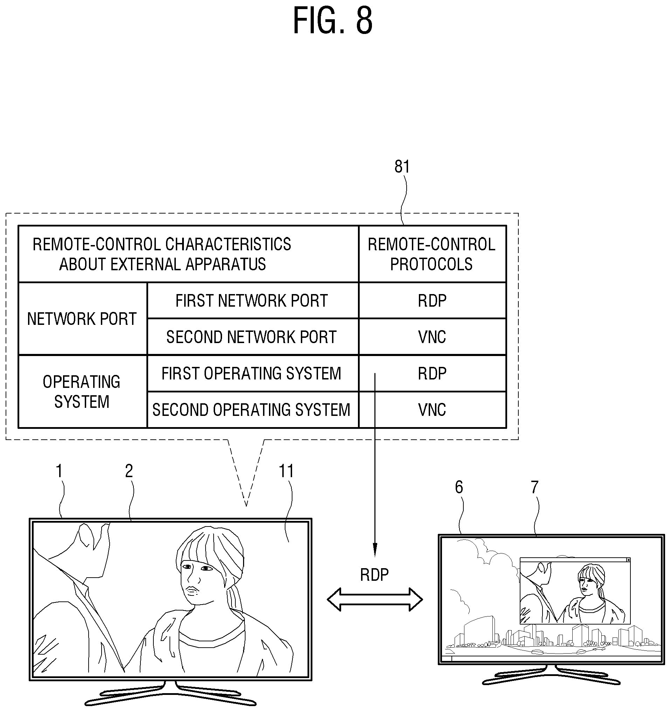

When a user input is made to select a certain external apparatus through the external-apparatus list UI 51, the processor 4 may identify the remote-control characteristic of the selected external apparatus, and perform the remote control for the external apparatus based on the identified remote-control characteristic of the selected remote-control protocol. In this regard, details will be described with reference to FIGS. 8 to 11.

Thus, the processor 4 according to an embodiment displays the external-apparatus list UI 51 for the external apparatuses to be remotely controlled, so that a user can easily select the external apparatus to be remotely controlled, thereby further improving the utilizability of the remote-control function and the user convenience.

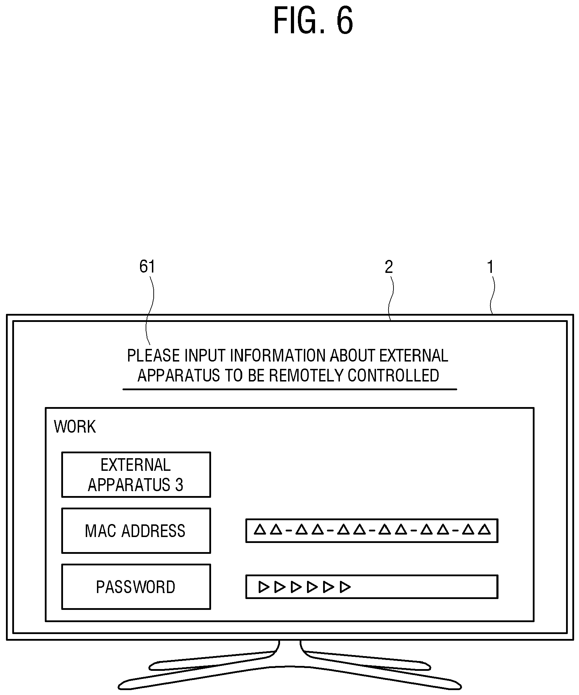

FIG. 6 illustrates another example that the display apparatus searches for an external apparatus, in connection with operation S41 of FIG. 4. As shown in FIG. 6, the processor 4 according to an embodiment displays an identification information input UI 61, which is to receive identification information about an external apparatus to be remotely controlled, on the display 2, and identify the external apparatus to be remotely controlled, based on the identification information received by a user input. The identification information may for example include a media access control (MAC) address, a password, etc. of the external apparatus, but not limited thereto. Alternatively, the identification information may include any information as long as it can be used in identifying the external apparatus according to design methods.

Thus, the processor 4 according to an embodiment displays the identification information input UI 61, identifies the external apparatus disconnected from the local network based on the identification information input through the identification information input UI 61, and performs the remote control with regard to the identified external apparatus, thereby further improving the utilizability of the remote-control function and the user convenience.

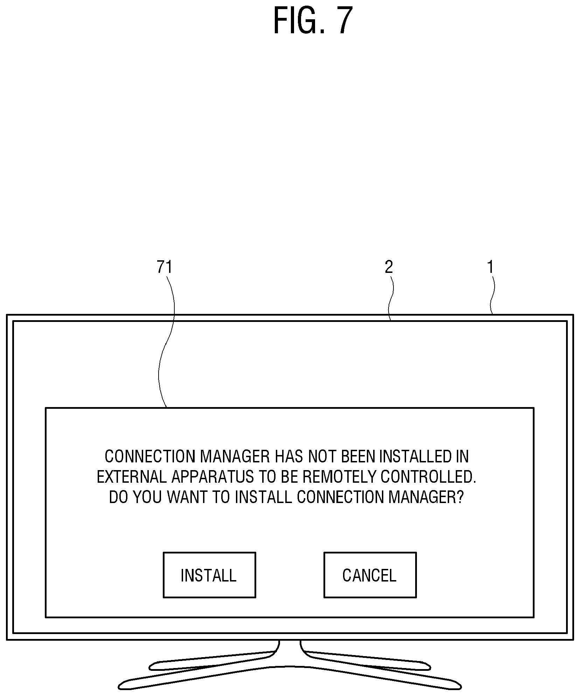

FIG. 7 illustrates an example that the display apparatus guides installation of an application for remote control, in connection with operation S41 of FIG. 4. As described above with reference to FIG. 3, when there is an external apparatus 6 to be remotely controlled, the processor 4 according to an embodiment may identify whether the second connection manager 39 or the like application for the remote control has been installed in the external apparatus 6. The second connection manager 39 or the like application for the remote control may identify the remote-control characteristic of the external apparatus 6, select the remote-control protocol based on the identified information, and provide information about the selected remote-control protocol to the display apparatus 1. Therefore, the remote-control protocol suitable for the current conditions is selectable, thereby improving the utilizability of the remote-control function and the user convenience.

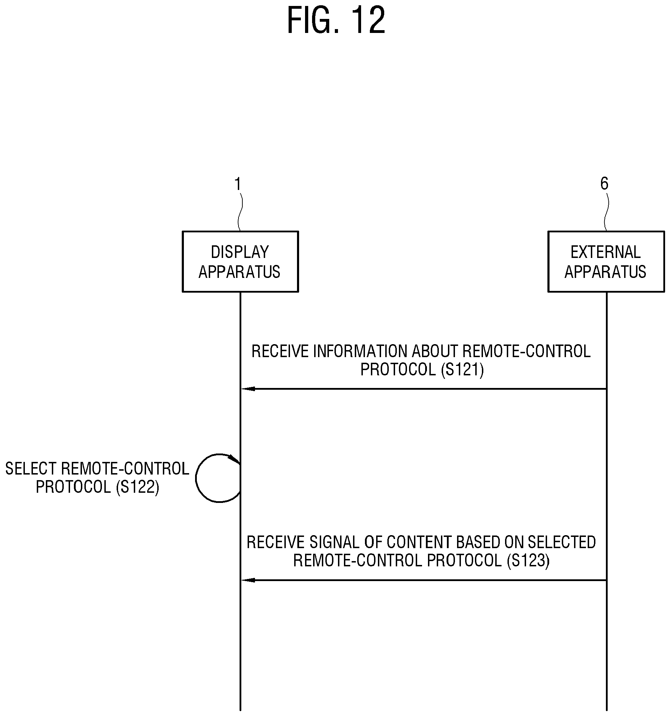

When the second connection manager 39 has already been installed, the processor 4 may select the remote-control protocol based on the information received through the second connection manager 39. Below, it will be described in detail with reference to FIG. 12 that the remote-control protocol is selected through the second connection manager 39 of the external apparatus 6.

FIG. 12 illustrates an example of selecting a remote-control protocol based on information received from an external apparatus, in connection with operation S42 of FIG. 4. As shown in FIG. 12, the processor 4 may receive the information about the remote-control protocol from the external apparatus 6 (S121). For example, the processor 4 may transmit a request for the remote control to the external apparatus 6, and the second connection manager 39 of the external apparatus 6 may identify the remote-control characteristic of the external apparatus 6 in response to the request. The second connection manager 39 may select the remote-control protocol by taking the remote-control characteristic into account, and transmit the information about the remote-control protocol to the display apparatus 1. Then, the processor 4 may select the remote-control protocol corresponding to the external apparatus 6 based on the information received from the external apparatus 6 (S122), and receive a signal of content from the external apparatus 6 based on the selected remote-control protocol (S123).

On the other hand, when the second connection manager 39 is not installed in the external apparatus 6 to be remotely controlled, the processor 4 may display a notification UI 71, which notifies no installation of the second connection manager 39 or guides installation of the second connection manager 39, on the display 2 as shown in FIG. 7.

The notification UI 71 may include an "install" menu which guides the second connection manager 39 to be installed in the external apparatus 6. The processor 4 may install the second connection manager 39 in the external apparatus 6 in response to a user input made to select the "install" menu. For example, the processor 4 may transmit an installation file for the second connection manager 39 to the external apparatus 6 to be remotely controlled, in response to a user input made to select the "install" menu. The installation file may be automatically installed in the external apparatus 6, or may be executed in the external apparatus 6 based on a user's installation approval command so that the second connection manager 39 can be installed in the external apparatus 6. The installation file may have been stored in the display apparatus 1, or may be received as the processor 4 accesses an external download server in response to a user input made to select the "install" menu.

When the processor 4 identifies the external apparatus 6 as the in-home external apparatus 6, the processor 4 may transmit the installation file for the second connection manager 39 to the external apparatus 6 in response to a user's installation approval command input to the external apparatus 6. This is because a user can have access to the in-home external apparatus 6 and it is thus possible to install the file upon a user's installation approval command. On the other hand, when the processor 4 identifies the external apparatus 6 as the out-of-home external apparatus 6 provided at work or the like, the processor 4 may transmit the installation file, which allows the external apparatus 6 to install the second connection manager 39 therein regardless of a user's installation approval command, to the out-of-home external apparatus 6. Such automatic installation of the second connection manager 39 is useful when it is difficult for a user to access the out-of-home external apparatus 6.

Meanwhile, when a user input is made to select a "cancel" menu, the processor 4 may directly identify the remote-control characteristic of the external apparatus 6, and select the remote-control protocol according to the identified remote-control characteristic. However, it may also possible to display the notification UI 71 and guide the installation of the second connection manager 39 even when the processor 4 directly identifies the remote-control characteristic. For example, the processor 4 may periodically display the notification UI 71 at predetermined intervals. However, the display of the notification UI 71 is not limited to this example, and the period, times, and the like of displaying the notification UI 71 may be set according to design methods.

Thus, the processor 4 according to an embodiment identifies whether the application for the remote control has been installed in the external apparatus 6 to be remotely controlled, and displays the notification UI 71 for guiding the installation of the application for the remote control, thereby further improving the utilizability of the remote-control function and the user convenience.

Referring back to the operation 41 in FIG. 4, the processor 4 may identify the remote-control characteristic of the external apparatus 6 to be remotely controlled. Here, as mentioned above, the remote-control characteristic may for example include the operating system of the external apparatus 6, a program to be remotely controlled, content to be used, a remote network condition, a user's preference or use history, etc. To identify the remote-control characteristic of the current condition, the processor 4 may for example obtain information about the operating system of the external apparatus 6 to be remotely controlled, etc. The processor 4 identifies the remote-control characteristic based on the obtained information about the operation system of the external apparatus 6, etc. Further, the processor 4 may select the remote-control protocol based on the identified remote-control characteristic. Below, it will be described in detail with reference to FIG. 8 that the remote-control protocol is selected based on various examples of the remote-control characteristic, for example, the operating system of the external apparatus 6, etc.

FIG. 8 illustrates an example of selecting a remote-control protocol based on a remote-control characteristic, i.e. an operating system of an external apparatus. As shown in FIG. 8, the processor 4 according to an embodiment may select the remote-control protocol based on the remote-control characteristic, for example, the operating system of the external apparatus 6. The reason why the remote-control protocol is selected based on the operating system is because the operating systems are different in supporting the remote-control protocol. When a protocol unsuitable for the operating system is selected, performance of the remote control may be degraded or the remote control itself may be impossible.

The processor 4 may consider a look-up table 81 in which the information about the remote-control protocols is tabulated matching the operating systems of the external apparatus 6. The look-up table 81 may have been stored in the display apparatus 1, or received from an external download server. However, the look-up table 81 shown in FIG. 8 does not limit the remote-control protocols matching the operating system. Alternatively, various look-up tables other than the look-up table 81 may be provided according to design methods.

In more detail, referring to FIG. 8, when it is identified that the external apparatus 6 to be remotely controlled operates under a first operating system, the processor 4 may for example select an RDP matching the first operating system with reference to the look-up table 81 and perform the remote-control data communication with the external apparatus 6 based on the RDP. On the other hand, in a case of a second operating system, the processor 4 may perform the remote-control data communication with the external apparatus 6 based on a VNC with reference to the look-up table 81.

Further, the information about the remote-control protocols in the look-up table 81 may be tabulated matching network ports of the external apparatus 6, and the processor 4 may identify the network port of the external apparatus 6 and select the remote-control protocol matching the network port with reference to the look-up table 81. This is because the operating systems have their own unique values of the network ports and it is thus possible to estimate the operating system based on the network port. In more detail, referring to FIG. 8, when it is identified that the external apparatus 6 uses a first network port, the processor 4 may select the RDP matching the first network port with reference to the look-up table 81 and perform the remote-control data communication with the external apparatus 6 based on the RDP. On the other hand, in a case of a second network port, the processor 4 selects the VNC matching the second network port with reference to the look-up table 81 and perform the remote-control data communication with the external apparatus 6 based on the VNC.

Thus, the processor 4 according to an embodiment may select the remote-control protocols suitable for the external apparatuses different in the operating system and the network port from each other. Therefore, the remote-control protocol is adaptively selected even under increasingly complex remote-control environments, thereby further improving the utilizability of the remote-control function and the user convenience.

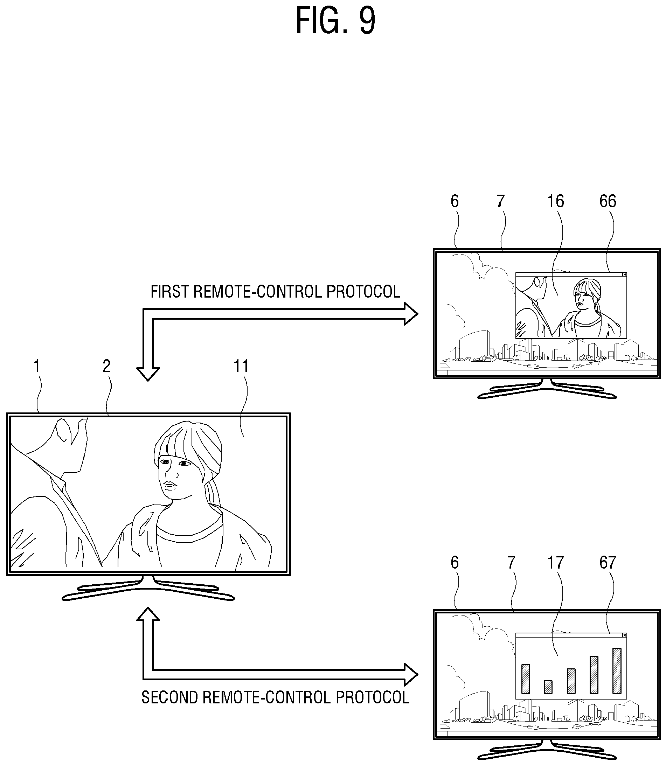

FIG. 9 illustrates an example of selecting a remote-control protocol based on a remote-control characteristic, i.e. an application program executed in an external apparatus. As shown in FIG. 9, the processor 4 according to an embodiment may select the remote-control protocol based on the remote-control characteristic, for example, the application program executed in the external apparatus 6. Below, it will be described in detail that the processor 4 identifies the remote-control protocol based on whether the type of application program executed in the external apparatus 6 is an application program about a moving image or a still image.

When a moving-image application program 66 is executed in the external apparatus 6, the processor 4 may select a first remote-control protocol corresponding to the moving-image application program 66 executed in the external apparatus 6. For example, the mirroring-based remote-control data communication of the streaming mode may be suitable for the moving image or the like large data. Therefore, the processor 4 may select the mirroring, and receive a signal of content from the external apparatus 6 based on the mirroring, so that the moving image 16 of the content displayed on the external apparatus 6 by the moving-image application program 66 can be displayed on the display apparatus 1.

On the other hand, when a document program 67 for a presentation or the like is executed in the external apparatus 6, the processor 4 may select a second remote-control protocol corresponding to the document program 67. For example, the RDP or VNC-based remote-control data communication may be efficient and suitable for a still image 17 based on the document program 67. Therefore, the processor 4 selects the RDP or VNC, and receives a signal of content from the external apparatus 6 based on the RDP or VNC, so that the still image 17 of the content displayed on the external apparatus 6 by the document program 67 can be displayed on the display apparatus 1.

To this end, the processor 4 may consider the look-up table in which the information about the remote-control protocols is tabulated matching the application programs executed to the external apparatus 6. The look-up table may have been stored in the display apparatus 1 or received from an external download server. For example, in the look-up table, the moving-image application programs may be tabulated matching the mirroring, and the document programs may be tabulated matching the RDP or VNC. However, the look-up table is not limited to this example. Alternatively, the look-up table may be variously designed to tabulate various types of application programs matching the mirroring, the RDP, the VNC, and the like remote-control protocols.

Meanwhile, the processor 4 may select the remote-control protocol based on quality of an image displayed on the external apparatus 6 by the application program executed in the external apparatus 6. For example, when the image 16 of a high resolution is displayed on the external apparatus 6 by the application program executed in the external apparatus 6, the processor 4 may select the mirroring suitable for the remote-control data communication for the image 16 of the high resolution. On the other hand, when the image 16 of a low resolution is displayed on the external apparatus 6, the processor 4 may select the RDP or VNC. The processor 4 may consider the look-up table in which the information about the remote-control protocols is tabulated matching the qualities of the image displayed on the external apparatus 6 by the application program executed in the external apparatus 6.

Further, the processor 4 may select the remote-control protocol based on a user control level with regard to the application program executed in the external apparatus 6. Here, the user control level may refer to a level of a user input or the like control required while the program is used. For example, the processor 4 may select the mirroring with regard to the application program of which the user control level is low like the moving image, but may select the RDP or VNC with regard to the application program of which the user control level is high like the presentation. The processor 4 may consider the look-up table in which the information about the remote-control protocols is tabulated matching the user control levels with respect to the application program executed in the external apparatus 6.

Thus, the processor 4 according to an embodiment may select the remote-control protocol based on the application program executed in the external apparatus 6. Therefore, the remote-control protocol is adaptively selected even under increasingly complex remote-control environments, thereby further improving the utilizability of the remote-control function and the user convenience.

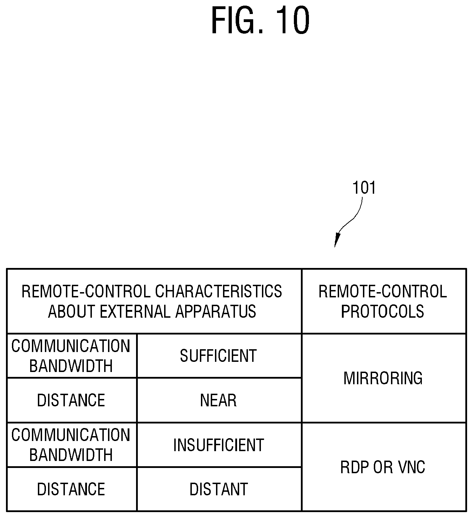

FIG. 10 illustrates an example of selecting a remote-control protocol based on a remote-control characteristic, i.e. a network condition. As shown in FIG. 10, the processor 4 according to an embodiment may select the remote-control protocol based on the remote-control characteristic, for example, network conditions such as a communication bandwidth, a distance from the external apparatus 6, etc. To this end, the processor 4 may consider a look-up table 101 in which the information about the remote-control protocols is tabulated matching the network conditions. For example, the information about the remote-control protocols in the look-up table 101 may be tabulated according to whether the communication bandwidth is sufficient or insufficient, or whether the display apparatus 1 is near or distant from the external apparatus 6. Here, whether the communication bandwidth is sufficient or not may be identified based on whether a frequency range for data communication with the external apparatus 6 is higher than or equal to a predetermined threshold. Further, whether the display apparatus 1 is near or distant from the external apparatus 6 may be identified based on whether the distance from the external apparatus 6 is shorter than a predetermined threshold. However, the frequency range and the distance threshold may be varied depending on design methods. Further, the look-up table 101 may have been stored in the display apparatus 1 or received from an external download server.

In more detail, referring to FIG. 10, when it is identified that the communication bandwidth for the external apparatus 6 is sufficient and the distance from the external apparatus 6 is short, the processor 4 may select the mirroring with reference to the look-up table 101, and perform the remote-control data communication with the external apparatus 6 based on the mirroring. On the other hand, when it is identified that the communication bandwidth for the external apparatus 6 is insufficient and the distance from the external apparatus 6 is long, the processor 4 may select the RDP or VNC with reference to the look-up table 101, and perform the remote-control data communication with the external apparatus 6 based on the selected RDP or VNC.

Thus, the processor 4 according to an embodiment may select the remote-control protocol based on the network conditions such as the communication bandwidth, the distance from the external apparatus 6, etc. Therefore, the remote-control protocol is adaptively selected even under increasingly complex remote-control environments, thereby resulting in further improving the utilizability of the remote-control function and the user convenience.

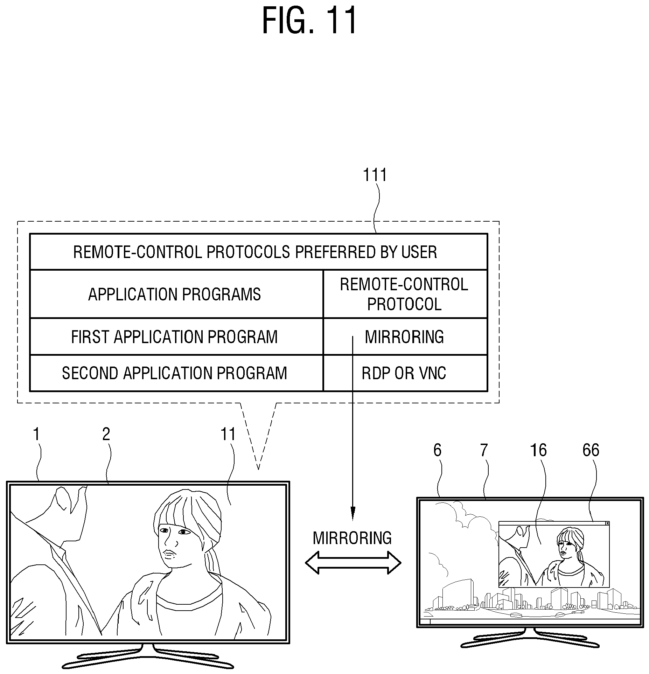

FIG. 11 illustrates an example of selecting a remote-control protocol based on a remote-control characteristic, i.e. user preference or use history. As shown in FIG. 11, the processor 4 according to an embodiment may select the remote-control protocol based on the remote-control characteristic, for example, a user's preference or use history. Below, it will be described that the processor 4 selects the remote-control protocol, which is preferred by a user or has previously been used by a user, with respect to the application program executed in the external apparatus 6.

The processor 4 may collect a use history of the remote-control protocols selected with respect to a specific application of the external apparatus 6 to be remotely controlled. Here, the remote-control protocols may have previously been selected by a user. The processor 4 may include a look-up table 111 in which the remote-control protocols preferred by a user are tabulated based on the collected use history. For example, referring to FIG. 11, when a user selects the mirroring with regard to a first application program 66 executed in the external apparatus 6, the processor 4 may tabulate the first application program 66 matching the mirroring in the look-up table 111. In other words, the processor 4 may make the look-up table 111 reflect that the remote-control protocol preferred by a user with respect to the first application program 66 is the mirroring, by considering how many times the user selects the mirroring with respect to the first application program 66. Similarly, the processor 4 may make the look-up table 111 reflect that the remote-control protocol preferred by a user with respect to the second application program is the RDP or VNC, based on the use history that a user has selected the RDP or VNC with respect to the second application program executed in the external apparatus 6.

When the first application program is executed in the external apparatus 6 to be remotely controlled, the processor 4 may select the mirroring with reference to the look-up table 111, and perform the remote-control data communication with the external apparatus 6 based on the mirroring. On the other hand, when the second application program is executed in the external apparatus 6 to be remotely controlled, the processor 4 may select the RDP or VNC with reference to the look-up table 111 and perform the remote-control data communication with the external apparatus 6 based on the selected RDP or VNC.

Alternatively, the processor 4 may select the remote-control protocol preferred by a user with respect to a specific external apparatus 6. In other words, the processor 4 according to the previous embodiment selects the remote-control protocol preferred by a user when the remote-control protocol preferred by the user is present with respect to the application program executed in the external apparatus 6, but the processor 4 according to this embodiment is different from the previous embodiment in that the remote-control protocol preferred by the user is selected when the remote-control protocol preferred by the user is present with respect to the specific external apparatus 6.

Like the previous embodiment, the processor 4 may collect a use history of the remote-control protocols selected by a user with respect to the external apparatus 6 to be remotely controlled. The processor 4 may include a look-up table in which the remote-control protocols preferred by a user are tabulated based on the collected use history. For example, when a user selects the mirroring with regard to a first external apparatus, the processor 4 may tabulate the first external apparatus matching the mirroring in the look-up table. In other words, the processor 4 may make the look-up table reflect that the remote-control protocol preferred by a user with respect to the first external apparatus is the mirroring, by considering how many times the user selects the mirroring with respect to the first external apparatus. Similarly, the processor 4 may make the look-up table reflect that the remote-control protocol preferred by a user with respect to a second external apparatus is the RDP or VNC, based on the use history that a user has selected the RDP or VNC with respect to the second external apparatus.

When a user selects the first external apparatus as the external apparatus 6 to be remotely controlled, the processor 4 selects the mirroring with reference to the look-up table and performs the remote-control data communication with the first external apparatus based on the mirroring. On the other hand, when a user selects the second external apparatus as the external apparatus 6 to be remotely controlled, the processor 4 selects the RDP or VNC with reference to the look-up table and performs the remote-control data communication with the second external apparatus based on the selected RDP or VNC.

Thus, the processor 4 according to an embodiment may select the remote-control protocol based on a user's preference or use history. Therefore, the remote-control protocol is adaptively selected even under increasingly complex remote-control environments, thereby further improving the utilizability of the remote-control function and the user convenience.

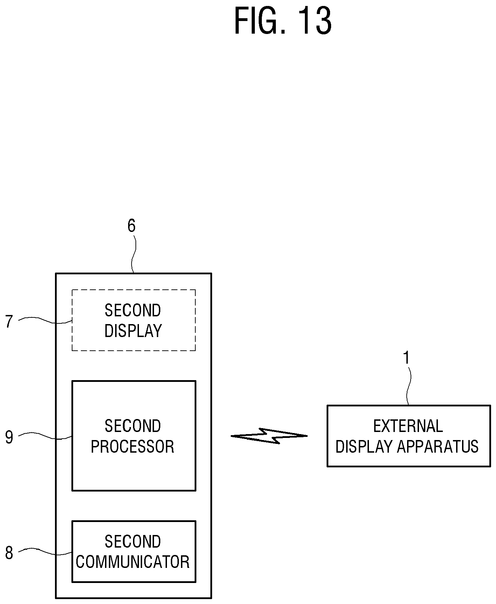

FIG. 13 is a block diagram showing an exemplary configuration of an electronic apparatus 6 according to another embodiment. An electronic apparatus 6 and an external display apparatus 1 shown in FIG. 13 correspond to the external apparatus 6 and the display apparatus 1 shown in FIG. 2, respectively. Therefore, details will be described below avoiding repetitive descriptions and focusing on only difference between FIGS. 2 and 13.

As shown in FIG. 13, the electronic apparatus 6 may include the second display 7, the second communicator 8, and the second processor 9. The second display 7 may display an image of content based on a signal of the content. The second display 7 may for example be embodied by various types, such as liquid crystal, plasma, an organic light-emitting diode, a carbon nano-tube, nano-crystal, etc., but not limited thereto. The electronic apparatus 6 may further include a second signal receiver configured to receive the signal of the content from the outside, and a second signal processor configured to process the received signal of the content. The second display 7 may display the image of the content based on the signal of the content processed by the second signal processor. When the signal of the content is a type of broadcast signal, the second display 7 may display a broadcast image based on a broadcast signal or a channel which is tuned by the second signal processor.

The second communicator 8 may perform data communication with the external display apparatus 1. The second communicator 8 may for example perform wired or wireless communication based on a wired local area network (LAN), Wi-Fi, Bluetooth, ZigBee, WFD, UWB, IrDA, BLE, NFC, etc. and include at least one communication module for the wired or wireless communication. The second communicator 8 may perform data communication with each individual among the plurality of external display apparatuses including the external display apparatus 1 or may simultaneously perform data communication with at least two among the plurality of external display apparatuses.

The second processor 9 may control general elements of the electronic apparatus 6. For example, the second processor 9 may identify the remote-control characteristic of the electronic apparatus 6 in response to a request for the remote control received from the display apparatus 1, and select one among the plurality of remote-control protocols based on the identified remote-control characteristic. Further, the second processor 9 may control the second communicator 8 to transmit information about the selected remote-control protocol to the display apparatus 1, and transmit the signal of the content to the display apparatus 1 based on the selected remote-control protocol.

The second processor 9 may include a control program (or instruction) for performing control with regard to general elements, a nonvolatile memory in which the control program is installed, a volatile memory in which at least a part of the installed control program is loaded, and at least one processor or CPU for executing a loaded control program. Further, such a control program may have been stored in an electronic apparatus other than the electronic apparatus 6.

The control program may include a program(s) actualized in the form of at least one among a BIOS, a device driver, an operating system, a firmware, a platform, and an application. According to an exemplary embodiment, the application may be previously installed or stored when the display apparatus 1 is manufactured, or may be installed based on application data received from the outside when it is used in the future. The application data may for example be downloaded from an application market and the like external server. Such a server is an example of a computer program product, but not limited to this example.

At least one element may be excluded from the foregoing configuration of the electronic apparatus 6 or another element may be added to the foregoing configuration of the electronic apparatus 6. For example, the electronic apparatus 6 may further include a second storage.

The second storage may be configured to store data for processing the elements of the electronic apparatus 6 and programs for controlling the elements. The storage may include a storage medium of at least one type among a flash memory type, a hard disk type, a multimedia card micro type, a card type memory, and a ROM. Further, without limitations, the second storage may also be achieved by a web storage configured to store data and programs on the Internet.

Thus, when the electronic apparatus 6 according to an embodiment is remotely controlled by the display apparatus 1, the remote-control data communication may be performed adaptively based on the selected remote-control protocol according to the remote-control characteristic of the electronic apparatus 6. Therefore, the remote-control data communication is efficient even under increasingly complex remote-control environments, thereby further improving the utilizability of the remote-control function and the user convenience.

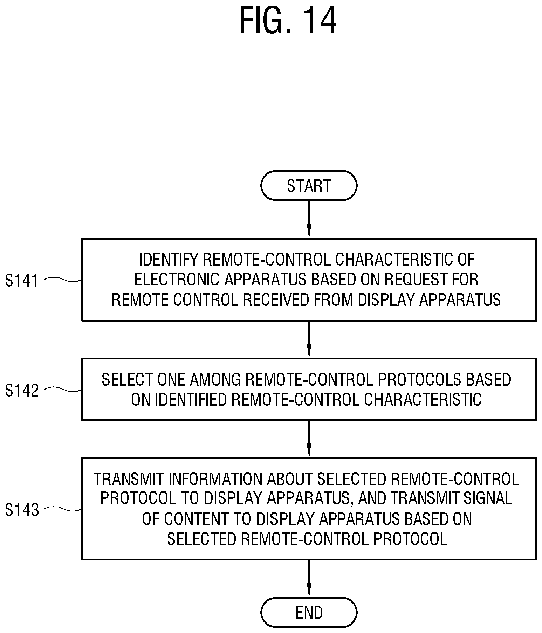

FIG. 14 is a flowchart showing an exemplary control method of the electronic apparatus in FIG. 13. In this embodiment, the control method may be carried out as the second processor 9 of the electronic apparatus 6 executes the control program described above. Hereafter, for convenience of description, the operations of the second processor 9 carried out by executing the control program may be simply described as the operations of the second processor 9.

Referring to FIG. 14, the second processor 9 identifies the remote-control characteristic about the external apparatus 6 based on a request for the remote control received from the display apparatus 1 (S141), and selects one among the plurality of remote-control protocols based on the identified remote-control characteristic (S142).

Further, the second processor 9 transmits information about the selected remote-control protocol to the display apparatus 1, and transmits the signal of the content to the display apparatus 1 based on the selected remote-control protocol.

Thus, by the control method according to this embodiment, when the electronic apparatus 6 is remotely controlled by the display apparatus 1, the remote-control data communication is performed adaptively based on the selected remote-control protocol according to the remote-control characteristic of the electronic apparatus 6. Therefore, the remote-control data communication is efficiently performed even under increasingly complex remote-control environments, thereby further improving the utilizability of the remote-control function and the user convenience.

According to the disclosure, a remote-control protocol is adaptively selected by taking remote-control environments into account when a display apparatus is used to remotely control an external apparatus, thereby further improving utilizability of a remote-control function and user convenience.

The operations of the control method in this disclosure may be implemented by a computer program that includes instructions to make a computer carry out the operations, and such a computer program may be stored or recorded in a storage. The storage may be provided as a non-transitory storage medium. Here, the term "non-transitory" means that the storage medium does not include a signal and is tangible but does not indicate whether data is stored in the storage medium semi-permanently or temporarily.

Although a few embodiments of the disclosure have been described in detail, the disclosure is not limited to these embodiments but variously embodied within the appended claims.

## Claims

1. A display apparatus comprising:
a display;
a communicator; and
a processor configured to:
identify an external apparatus to be remotely controlled through the communicator and a remote-control characteristic about the external apparatus,
select one among a plurality of remote-control protocols based on the identified remote-control characteristic,
control the communicator to receive a signal of content from the external apparatus based on the selected remote-control protocol, and
control the display to display an image of the content based on the received signal.

2. The display apparatus according to claim 1, wherein the remote-control characteristic comprises a characteristic of an operating system of the external apparatus.

3. The display apparatus according to claim 2, wherein the processor identifies the characteristic of the operating system based on information about a network port of the external apparatus.

4. The display apparatus according to any one of claims 1 to 3, wherein the remote-control characteristic comprises at least one of a bandwidth for communication with the external apparatus or a distance from the external apparatus.

5. The display apparatus according to any one of claims 1 to 4, wherein the remote-control characteristic comprises a characteristic of an application program executed in the external apparatus.

6. The display apparatus according to claim 5, wherein the characteristic of the application program comprises quality of an image displayed on the external apparatus by the application program.

7. The display apparatus according to claim 5, wherein the characteristic of application program comprises a user control level with regard to the application program.

8. The display apparatus according to any one of claims 1 to 7, wherein the remote-control characteristic comprises a characteristic of user preference about the remote-control protocols.

9. The display apparatus according to any one of claims 1 to 8, wherein the processor is configured to:
receive information about the remote-control protocol from the identified external apparatus, and
select one among the plurality of remote-control protocols based on the received information.

10. The display apparatus according to any one of claims 1 to 9, wherein the processor is configured to:
identify whether an application for remote control is installed in the external apparatus, and
perform operation for installing the application based on the application being not installed.

11. The display apparatus according to any one of claims 1 to 10, wherein the remote-control protocol comprises one of remote desktop protocol (RDP), virtual network computing (VNC), or mirroring.

12. A method of controlling a display apparatus, the method comprising:
identifying an external apparatus to be remotely controlled and a remote-control characteristic about the external apparatus;
selecting one among a plurality of remote-control protocols based on the identified remote-control characteristic;
receiving a signal of content from the external apparatus based on the selected remote-control protocol; and
displaying an image of the content based on the received signal.

13. An electronic apparatus comprising:
a communicator; and
a processor configured to:
identify a remote-control characteristic of the electronic apparatus based on a request for remote control received from a display apparatus through the communicator,
select one among a plurality of remote-control protocols based on based on the identified remote-control characteristic, and
controlling the communicator to transmit information about the selected remote-control protocol to the display apparatus, and transmit a signal of content to the display apparatus based on the selected remote-control protocol.

14. A method of controlling an electronic apparatus, the method comprising:
identifying a remote-control characteristic of the electronic apparatus based on a request for remote control received from a display apparatus;
selecting one among a plurality of remote-control protocols based on based on the identified remote-control characteristic; and
transmitting information about the selected remote-control protocol to the display apparatus, and transmitting a signal of content to the display apparatus based on the selected remote-control protocol.

15. A recording medium stored with a computer program comprising a code for carrying out a method of controlling a display apparatus, as a computer readable code, the method comprising:
identifying an external apparatus to be remotely controlled and a remote-control characteristic about the external apparatus;
selecting one among a plurality of remote-control protocols based on the identified remote-control characteristic;
receiving a signal of content from the external apparatus based on the selected remote-control protocol; and
displaying an image of the content based on the received signal.
